# EUROPEAN PATENT SPECIFICATION

(11) **EP 2 668 735 B1**
(45) Date of publication and mention of the grant of the patent: **03.10.2018**
(21) Application number: 11702398.6
(22) Date of filing: 28.01.2011
(51) Int. Cl.: H04L 1/18, H04L 1/00

(54) **APPARATUS AND METHOD FOR COMMUNICATION**
VORRICHTUNG UND VERFAHREN ZUR KOMMUNIKAITON
APPAREIL ET PROCÉDÉ POUR LA COMMUNICATION

(43) Date of publication of application: 04.12.2013
(73) Proprietor: Nokia Solutions and Networks Oy, 02610 Espoo (FI)
(72) Inventor: KINNUNEN, Pasi Eino Tapio, FIN-90240 Oulu (FI); PAJUKOSKI, Kari Pekka, FIN-90240 Oulu (FI)
(74) Representative: Kolster Oy Ab
(86) International application number: PCT/EP2011/000387
(87) International publication number: WO 2012/100790

(56) References cited:
- EP-A1- 1 858 187
- WO-A1-00/02341
- WO-A1-2007/081182
- US-A1- 2004 177 306

## Description

### Field

The exemplary and non-limiting embodiments of the invention relate generally to wireless communication networks and more specifically, to transmission and reception in wireless networks.

### Background

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.
Communication systems, and wireless communication systems in particular, have been under extensive development in recent years. An important factor in designing a future communication system is the support of higher data rates cost-effectively. One communication system supporting high data rates is the 3rd Generation Partnership Project (3GPP) Long Term Evolution (LTE) Release 8 radio access technologies for providing higher data rates cost-effectively exist. An improved version of the Long Term Evolution radio access system is called LTE-Advanced (LTE-A). The LTE is designed to support high-speed data, multimedia unicast and multimedia broadcast services.
So far, the properties of most communication systems have been optimized for low mobility environments. At high speeds (range of > 150 km/h) the performance of the systems tends to decrease rapidly. The reason for this is that the radio link layers of the systems have not been designed for high Doppler frequencies and accordingly reduced channel coherence times. As vehicles supporting high speeds, such as high speed trains, are becoming more common there is a need to secure communication also in such environments.
WO 00/02341 relates to packet transfer over a radio path in accordance with the ARQ protocol. It is based on the idea that instead of repeating in the retransmission the same bursts, i.e. the same information contained in the bursts in the same order, the order of the information is changed. This is done in such a way that the retransmission is not sent from one retransmission to another similarly interleaved, but the interleaving is changed. As a result, the content of the part that was incorrectly received in the previous transmission has been transferred to a new location. Hence, when the soft values of the channel corrector are combined, the probability of correct reception of this part in the retransmission greatly increases. Thereby the probability for error-free detection of the entire data packet notwithstanding the interference in the radio path is high.

### Summary

The following presents a simplified summary of the invention in order to provide a basic understanding of some aspects of the invention. This summary is not an extensive overview of the invention. Its sole purpose is to present some concepts of the invention in a simplified form as a prelude to a more detailed description that is presented below. The invention is defined by the subject matter of the independent claims. Preferred embodiments are set out in the dependent claims.

### List of drawings

Embodiments of the present invention are described below, by way of example only, with reference to the accompanying drawings, in which
Figure 1A illustrates a general architecture of a communication system;
Figure 1B illustrates examples of apparatuses according to embodiments of the invention;
Figures 2A, 2B, 2C, 2D, 2E, 2F, 2G, 2H, 2I, 2J , 2K, 2L and 2M illustrate examples of sub frames;
Figures 3 and 4 are flowcharts illustrating embodiments of the invention.

### Description of some embodiments

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Embodiments of the present invention are applicable to any user terminal, server, corresponding component, and/or to any communication system or any combination of different communication systems where data is transmitted in slots comprising reference symbols, the transmission applying hybrid automatic repeat and request (HARQ). The communication system may be a wireless communication system or a communication system utilizing both fixed networks and wireless networks. The protocols used and the specifications of communication systems, servers and user terminals, especially in wireless communication, develop rapidly. Such development may require extra changes to an embodiment. Therefore, all words and expressions should be interpreted broadly and are intended to illustrate, not to restrict, the embodiment.

A time-varying radio channel presents various problems in radio communication. Typical problems include fading, thermal noise, interference between users and intersystem interference. These problems must be taken into account in the design of radio communication systems. Hybrid automatic repeat request retransmission (HARQ) is a common approach to deal with time-varying radio channels. When an incoming data block at a receiving radio unit contains errors, the receiving radio unit requests a retransmission of the data block from the transmitting radio unit.

There are different types of HARQ. In Chase Combining (CC-HARQ), every retransmission contains the same bits. In Incremental Redundancy (IR-HARQ), every retransmission contains different bits than the previous one. The retransmissions convey additional parity bits or redundancy versions associated with a data packet. For example, in LTE-A based systems, CC-HARQ is utilised when low bit rate coding (such as 1/6, ¼ and 1/3 rate coding) is used in transmission and IR-HARQ is utilised when higher bit rates (such as ½, 2/3 or ¾ rate coding) are used.

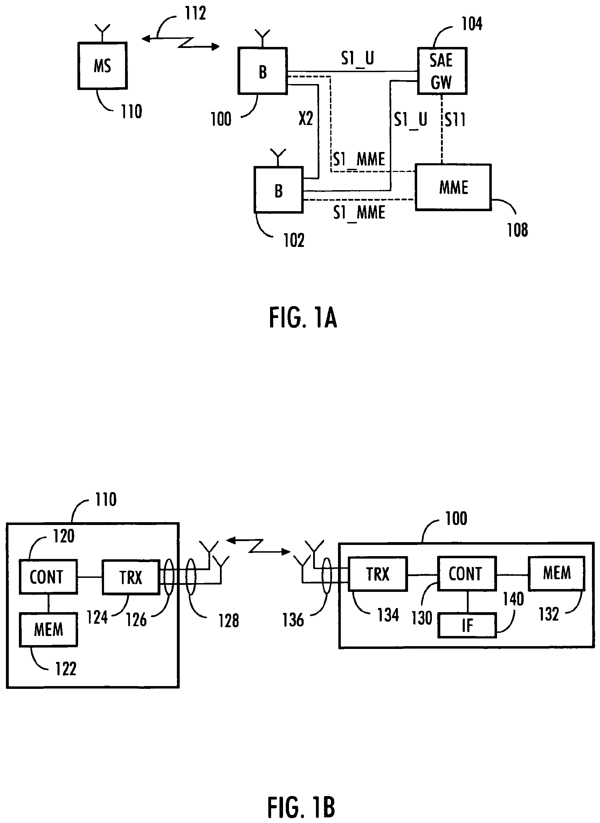

With reference to Figure 1, let us examine an example of a communication system to which embodiments of the invention can be applied. In this example, the core network of the communication system is based on LTE network elements. However, the invention described in these examples is not limited to the LTE network but can be implemented in systems utilizing various radio access technologies such as LTA-A, WiMAX (Worldwide interoperability for microwave access) and the like.

A general architecture of a communication system is illustrated in Figure 1A. Figure 1A is a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements, and protocols used in or for group communication are irrelevant to the actual invention. Therefore, they need not be discussed in more detail here. The exemplary radio system of Figure 1A comprises a service core of an operator including the following elements: an MME (Mobility Management Entity) 108 and an SAE GW (SAE Gateway) 104.

Base stations of the system may also be called eNBs (Enhanced node Bs, eNodeBs) 100, 102. In an embodiment, the eNBs of the system host the functions for Radio Resource Management: Radio Bearer Control, Radio Admission Control, Connection Mobility Control, Dynamic Resource Allocation (scheduling). In an embodiment, the system may comprise other network elements hosting at least part of respective functions. The MME 108 is responsible for distributing paging messages to the eNodeBs 100, 102. The eNodeBs are connected to the SAE GW with an S1_U interface and to MME with an S1_MME interface. The eNodeBs may be connected to each other with X2 interface.

Figure 1A shows user equipment 110 located in the service area of the eNodeB 100. User equipment refers to a portable computing device. Such computing devices include wireless mobile communication devices operating with or without a subscriber identification module (SIM), including, but not limited to, the following types of devices: mobile phone, smartphone, personal digital assistant (PDA), handset, laptop computer. The apparatus may be battery powered.

In the example situation of Figure 1A, the user equipment 110 has a connection 112 with the eNodeB 100. The connection 112 may be a bidirectional connection related to a speech call or a data service such as browsing the Internet 110.

Figure 1A only illustrates a simplified example. In practice, the network may include more base stations and radio network controllers, and more cells may be formed by the base stations. The networks of two or more operators may overlap, the sizes and form of the cells may vary from what is depicted in Figure 1A, etc.

It should be appreciated that the communication system may also comprise other core network elements besides SAE GW 104 and MME 108. In addition, the core network may be realized with different network elements altogether. Direct communication between different eNodeBs over an air interface is also possible by implementing a relay node concept, wherein a relay node may be considered as a special eNodeB having wireless backhauls or, for instance, X2 and S1 interfaces relayed over the air interface by another eNodeB. The communication system is also able to communicate with other networks, such as a public switched telephone network.

The embodiments are not, however, restricted to the network given above as an example, but a person skilled in the art may apply the solution to other communication networks provided with the necessary properties. For example, the connections between different network elements may be realized with Internet Protocol (IP) connections.

Figure 1B illustrates examples of apparatuses according to embodiments of the invention. Figure 1B shows user equipment 110 configured to be in connection with a base station 100 on a communication channel 112. The user equipment 110 comprises a controller 120 operationally connected to a memory 122 and a transceiver 124. The controller 120 controls the operation of the user equipment. The memory 122 is configured to store software and data. The transceiver is configured to set up and maintain a wireless connection to the base station 100. The transceiver is operationally connected to a set of antenna ports 126 connected to an antenna arrangement 128. The antenna arrangement may comprise a set of antennas. The number of antennas may be one to four, for example. The number of antennas is not limited to any particular number.

The base station or node B 100 comprises a controller 130 operationally connected to a memory 132 and a transceiver 134. The controller 130 controls the operation of the base station. The memory 132 is configured to store software and data. The transceiver 134 is configured to set up and maintain a wireless connection to user equipment within the service area of the base station. The transceiver 134 is operationally connected to an antenna arrangement 136. The antenna arrangement may comprise a set of antennas. The number of antennas may be one to four, for example. The number of antennas is not limited to any particular number.

The base station may be operationally connected to another network element of the communication system. The base station may be connected to more than one network element. The base station 100 may comprise an interface 140 configured to setup and maintain the connection with the network element.

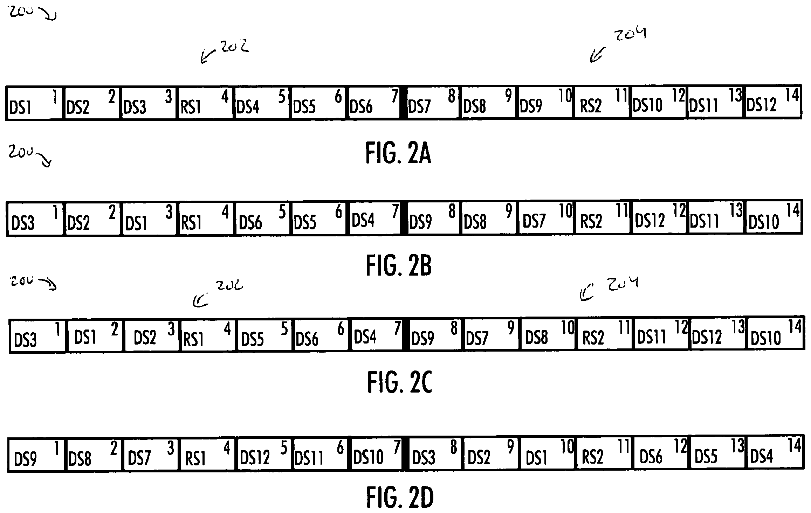

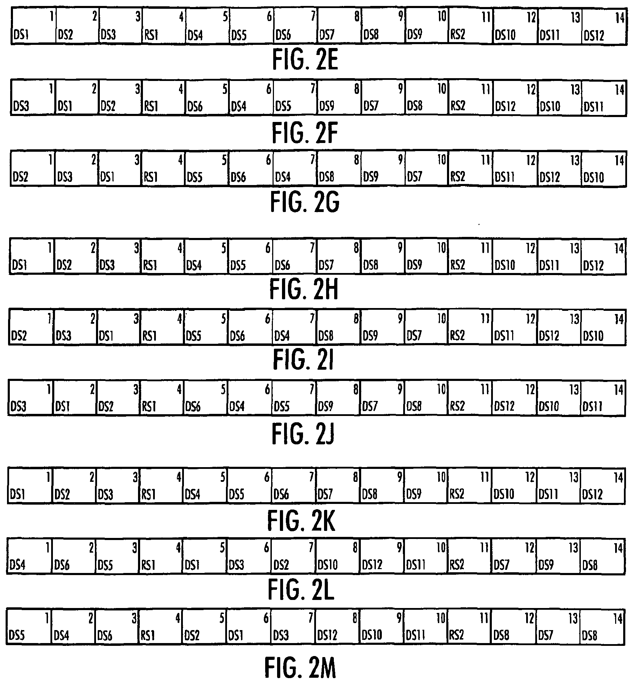

In the LTE-A, user data in uplink (UL) direction is transmitted on a physical uplink shared channel (PUSCH) from the UE 110 to the base stations or eNodeB 100. The PUSCH utilises a 10m frame comprising 20 slots. A sub frame comprising two 0.5 ms slots. A portion of the available spectrum may be allocated to a user equipment per sub frame. Each slot comprises for normal cyclic prefix (CP) length six OFDM symbols for the transmission of user data and one OFDM symbol for the transmission of UL reference symbols. Figure 2A illustrates a sub frame 200 comprising two time slots 202, 204. Each frame comprises reference symbols RS1, RS2 and user data DS1-DS7 and DS8 - DS12. The reference symbols are placed in the middle of the slot. The symbols are in particular used by the receiver to perform channel estimation. When the user equipment is placed in a high speed vehicle, the channel estimation may not be valid or may be at least less reliable for the OFDM data symbols which are in the far ends of the sub frame due to the short channel coherence time in a high-speed scenario. Thus, the quality of the channel estimation in a slot may significantly degrade with the distance of the OFDM data symbols from the reference symbols in the middle of the slot. The lower channel estimation quality for an OFDM symbol will lead to higher error rates for data conveyed on this OFDM symbol. Therefore, errors in transmission occur most likely in a high-speed scenario for data conveyed on OFDM symbols numbered in Figure 2 as 1 and 7 of the first slot 202 and 8 and 14 in the second slot 204.

In LTE-A, uplink transmission utilise single carrier frequency division multiple access SC-FDMA. In transmission, the bits to be transmitted are modulated with QPSK (quadrature phase-shift keying) or QAM (quadrature amplitude) modulation. The modulated symbols undergo a grouping followed by a size-M Discrete Fourier Transform (DFT) as a special spreading transform of the modulated symbols which ensures some frequency diversity of the transmitted symbols on the mobile channel. The output of the size-M DFT operation is mapped onto the available sub-carriers. Next, an N point Inverse Fast Fourier Transform (IFFT), where N>M is then performed as in the usual OFDM type transmission scheme, followed by the addition of the cyclic prefix and parallel to serial conversion. There are two cyclic-prefix lengths defined: normal cyclic prefix and extended cyclic prefix corresponding to seven and six OFDM symbols per slot, respectively.

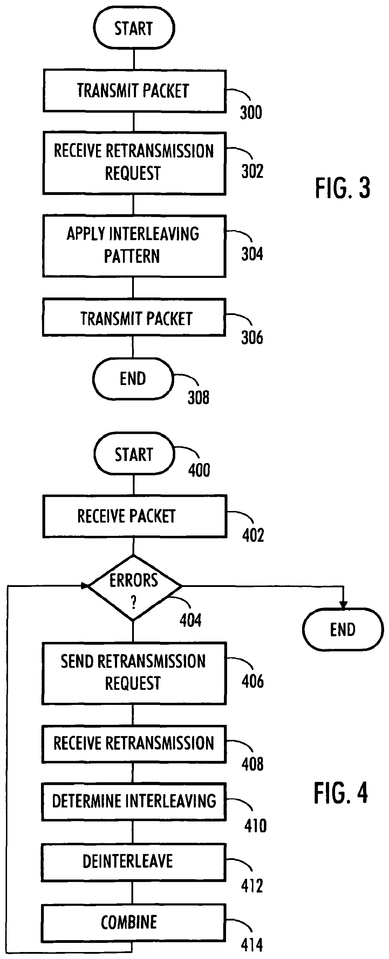

Figure 3 is a flowchart illustrating some embodiments of the invention. In this example we may assume that the user equipment 110 is transmitting to the eNodeB 100 on an uplink connection utilising CC-HARQ However, embodiments of the invention are not limited to CC-HARQ and uplink connections as one skilled in the art is aware. Different aspects of the invention may be applied on both uplink and downlink transmission directions in different types of communication systems and HARQ schemes.

In step 300, the user equipment 110 transmits a packet to the eNodeB 100. The controller 120 controls the transmitter to transmit the sub frame 200 to the eNodeB 100. The controller 120 is configured to apply hybrid automatic repeat and request in the transmissions with the eNodeB 100. In step 302, the controller receives a retransmission request from the eNodeB regarding the previous transmission. Thus, the eNodeB has detected an error in the data in the received packet.

In step 304, the controller is configured to apply a data interleaving pattern to the data, the pattern varying the distance of units of data from the reference symbols compared to previous transmission of the same data.

In step 306, the controller is configured to control the transmitter to retransmit the sub frame to the eNodeB 100. The procedure ends in step 308.

The number of retransmissions is not limited to one. The data may be retransmitted as many times as the receiving end requests retransmission or up to a preconfigured maximum number of retransmissions.
In an embodiment, the controller is configured to apply an interleaving pattern in retransmissions, where the positions of data units with the longest distance from the reference symbols in the first transmission are moved closest to the reference symbols.
In an embodiment, the controller is configured to apply a predetermined interleaving pattern in each retransmission. Thus, a given pattern is always used in a given retransmission.
Figure 2B illustrates a retransmission sub frame 200, where such an interleaving pattern has been applied. Here, the OFDM symbols comprising user data DS1-DS7 and DS8 - DS12 have been interleaved slot wise. The data units conveyed on the OFDM symbols which were closes to reference symbols in the first transmission have been moved to the farthest OFDM symbol and the respective data units conveyed on the OFDM symbol with the longest distance from the reference symbols in the first transmission have been moved to the OFDM symbol closest to the reference symbols. Thus, the data units the reception of which was affected most by a degrading channel estimation quality in the first transmission are moved for the retransmission to a location were the channel estimate obtained from the reference symbols is most reliable. This increases the probability of a successful decoding of the data after the retransmission. In the example of Figure 2B, the positions of DS1 and DS3, DS4 and DS7, DS7 and DS9 and DS10 and DS12 have been switched.
Figure 2C illustrates a retransmission sub frame 200, where another interleaving pattern has been applied. Here again, the OFDM symbols comprising user data DS1-DS6 and DS7 - DS12 have been interleaved slot wise. This interleaving pattern might be used in a third retransmission after the frames of Figures 2A and 2B, for example.

Figure 2D illustrates a retransmission sub frame 200, where another interleaving pattern has been applied. Here, the OFDM symbols comprising user data DS1-DS6 and DS7 - DS12 have been interleaved frame wise. Thus, the data units that were in the first slot 202 during the first transmission have been moved to the second slot 204 in the retransmission.

Figures 2E, 2F and 2G illustrate an example of possible interleaving patterns of an embodiment. In this example, symbol indexes are rotated right in subsequent retransmissions, and patterns are repeated every fourth retransmission. Thus, pattern of Fig. 2E is used in the first and fourth transmission, pattern of Fig. 2F in second and fifth transmission and pattern of Fig. 2G in third and sixth transmission.

In the example of Figures 2H, 2I, and 2J, symbol indexes are rotated right in subsequent retransmissions. In the example of Figures 2K, 2L, and 2M, the patterns are mirrored in relation to the reference symbols.
In the interleaving patterns described above, the unit of data used in the interleaving is an OFDM symbol. However, in other embodiments the unit of data may be a modulated symbol or a data bit, for example.
Embodiments of the invention are applicable also when multiple-input and multiple-output (MIMO) techniques are used in transmission. When MIMO is used, there may be multiple data streams transmitted concurrently. The above described embodiments may be applied to each data stream individually.
If IR-HARQ is utilised in transmission, an optimised interleaving pattern may be used in the transmission. The interleaving patterns may be designed as described above, by choosing the locations of data blocks in such a manner that the probability of a successful decoding is increased. The symbols located closer to reference symbols (having lower probability of error due better channel estimation in high speed conditions) are optimized for retransmission into better position in such way that span (distance from each other) of these better symbols is optimal meanwhile new retransmission symbol position distance to previous transmission symbol position(s) is maximum.

Figure 4 is a flowchart illustrating an embodiment of the invention. In this example we may assume that the eNodeB100 is receiving a transmission from the user equipment 110 on an uplink connection utilising CC-HARQ.

The process starts in step 400.

In step 402, the controller 130 controls the transceiver 134 in the reception of data in slots comprising reference symbols.

In step 404, the controller 130 is configured to detect whether the received packet is erroneous. If not, the controller may be configured to control the transceiver 134 to transmit an acknowledgement of receipt and the process ends.

If the packet is erroneous, the controller is configured to control the transceiver 134 to transmit a retransmission request to the user equipment 110 in step 406.

In step 408, the controller 130 controls the transceiver 134 in the reception of retransmitted data in slots comprising reference symbols.

In step 410, the controller is configured to detect a data interleaving pattern in retransmissions, the pattern varying the distance of units of data from the reference symbols compared to previous transmission of the same data. The interleaving pattern used in successive retransmissions may be predetermined. Thus, both the transmitting and receiving end are aware of the patterns used. In an embodiment, the pattern used by the transmitting end may be signaled to the receiving end.

In step 412, the data is deinterleaved.

In step 414, the information obtained from the retransmitted data and the previously received data are combined for an improved detection of the encoded data packet.

The process continues in step 404.

In an embodiment, the eNodeB is configured to signal information related to interleaving pattern to the cell served by the eNodeB or to specific user equipment. The eNodeB may control the interleaving pattern usedinthe retransmissions. The controlling may be based on feedback information from decoder soft outputs, for example.

The steps and related functions described in Figures 1A to 4 are in no absolute chronological order, and some of the steps may be performed simultaneously or in an order differing from the given one. Other functions can also be executed between the steps. Some of the steps can also be left out or replaced with a corresponding step.

An apparatus able to perform the above-described steps may be implemented as an electronic digital computer, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system which may provide system services to a computer program written with the program instructions.

An embodiment of the invention may be realised as a computer program or programs embodied on a distribution medium, comprising program instructions which, when loaded into an electronic apparatus, are configured to execute methods described above in connection with Figures 1A to 4.

The computer program or programs may be in source code form, object code form, or in some intermediate form, and may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or processor or it may be distributed amongst a number of computers or processors.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as technology advances, the inventive concept can be implemented in various ways. The invention and its embodiments are not limited to the examples described above but may vary within the scope of the claims.

## Claims

1. An apparatus, comprising:
at least one processor; and
at least one memory including computer program code,
the at least one memory and the computer program code configured to, with the at least one processor, cause the apparatus at least to perform:
control the transmission of data in slots comprising reference symbols, the transmission applying hybrid automatic repeat and request;
applying (304) a slot-wise data interleaving pattern in retransmissions, the pattern varying the distance of units of data from the reference symbols compared to units of data conveying the same or related information in a previous transmission.

2. The apparatus of claim 1, configured to apply a slot-wise interleaving pattern in retransmissions, where the positions of data units with the longest distance from the reference symbols in the first transmission are moved closest to the reference symbols.

3. The apparatus of claim 1, wherein the transmission comprises a sub frame comprising two time slots, wherein the positions of the data units are interleaved slot-wise within the two time slots.

4. The apparatus of claim 1, wherein the unit of data is one of the following: an OFDM symbol, a data bit, a modulated symbol.

5. The apparatus of claim 1, configured to apply a predetermined slot-wise interleaving pattern in each retransmission.

6. An apparatus, comprising:
at least one processor; and
at least one memory including computer program code,
the at least one memory and the computer program code configured to, with the at least one processor, cause the apparatus at least to perform:
control the reception of data in slots comprising reference symbols, the transmission applying hybrid automatic repeat and request;
detecting a slot-wise data interleaving pattern in retransmissions, the pattern varying the distance of units of data from the reference symbols compared to units of data conveying the same or related information in a previous transmission;
deinterleaving (412) the data; and
combining (414) the information obtained from the transmission and the previous transmission.

7. The apparatus of claim 6, configured to control the transmission of information related to slot-wise interleaving pattern.

8. A method comprising:
controlling the transmission of data in slots comprising reference symbols, the transmission applying hybrid automatic repeat and request;
applying (304) a slot-wise data interleaving pattern in retransmissions, the pattern varying the distance of units of data from the reference symbols compared to units of data conveying the same or related information in a previous transmission.

9. The method of claim 8, further comprising:
applying a slot-wise interleaving pattern in retransmissions, where the positions of data units with the longest distance from the reference symbols in the first transmission are moved closest to the reference symbols.

10. The method of claim 8 or 9, further comprising:
transmitting data utilising a subframe comprising two time slots, wherein the positions of the data units are interleaved slot-wise within the two time slots.

11. The method of claim 8 wherein the unit of data is one of the following: an OFDM symbol, a data bit, a modulated symbol.

12. The method of claim 8, further comprising: applying a predetermined slot-wise interleaving pattern in each retransmission.

13. A method comprising
controlling the reception of data in slots comprising reference symbols, the transmission applying hybrid automatic repeat and request;
detecting a slot-wise data interleaving pattern in retransmissions, the pattern varying the distance of units of data from the reference symbols compared to units of data conveying the same or related information in a previous transmission;
deinterleaving (412) the data; and
combining (414) the information obtained from the transmission and the previous transmission.

14. The method of claim 13, further comprising: controlling the transmission of information related to slot-wise interleaving pattern.

15. A computer program product embodied on a distribution medium comprising program instructions which, when loaded into an apparatus, control the apparatus to perform the method according to any of claims 8 to 14.

## Patentansprüche

1. Vorrichtung, umfassend:
mindestens einen Prozessor; und
mindestens einen Speicher, der Computerprogrammcode enthält,
wobei der mindestens eine Speicher und der Computerprogrammcode konfiguriert sind, mit dem mindestens einen Prozessor zu bewirken, dass die Vorrichtung mindestens Folgendes durchführt:
Steuern der Übertragung von Daten in Schlitzen, umfassend Referenzsymbole, wobei die Übertragung hybridautomatische Wiederholung und Anforderung anwendet;
Anwenden (304) eines schlitzweisen Datenverschachtelungsmusters bei Neuübertragungen, wobei das Muster die Distanz von Dateneinheiten von den Referenzsymbolen im Vergleich mit Dateneinheiten, die die gleichen oder verwandte Informationen in einer vorherigen Übertragung befördern, variiert.

2. Vorrichtung nach Anspruch 1, konfiguriert zum Anwenden eines schlitzweisen Verschachtelungsmusters bei Neuübertragungen, wobei die Positionen von Dateneinheiten mit der größten Distanz von den Referenzsymbolen in der ersten Übertragung am nächsten zu den Referenzsymbolen verlagert werden.

3. Vorrichtung nach Anspruch 1, wobei die Übertragung einen Teilrahmen umfasst, der zwei Zeitschlitze umfasst, wobei die Positionen der Dateneinheiten in den zwei Zeitschlitzen schlitzweise verschachtelt sind.

4. Vorrichtung nach Anspruch 1, wobei die Dateneinheit eines von Folgendem ist: ein OFDM-Symbol, ein Datenbit, ein moduliertes Symbol.

5. Vorrichtung nach Anspruch 1, konfiguriert zum Anwenden eines im Voraus bestimmten schlitzweisen Verschachtelungsmusters bei jeder Neuübertragung.

6. Vorrichtung, umfassend:
mindestens einen Prozessor; und
mindestens einen Speicher, der Computerprogrammcode enthält,
wobei der mindestens eine Speicher und der Computerprogrammcode konfiguriert sind, mit dem mindestens einen Prozessor zu bewirken, dass die Vorrichtung mindestens Folgendes durchführt:
Steuern der Übertragung von Daten in Schlitzen, umfassend Referenzsymbole, wobei die Übertragung hybridautomatische Wiederholung und Anforderung anwendet;
Detektieren eines schlitzweisen Datenverschachtelungsmusters bei Neuübertragungen, wobei das Muster die Distanz von Dateneinheiten von den Referenzsymbolen im Vergleich mit Dateneinheiten, die die gleichen oder verwandte Informationen in einer vorherigen Übertragung befördern, variiert;
Rückgängigmachen der Verschachtelung (412) der Daten; und
Kombinieren (414) der von der Übertragung und der vorherigen Übertragung erlangten Informationen.

7. Vorrichtung nach Anspruch 6, konfiguriert zum Steuern der Übertragung von Informationen hinsichtlich eines schlitzweisen Verschachtelungsmusters.

8. Verfahren, umfassend:
Steuern der Übertragung von Daten in Schlitzen, umfassend Referenzsymbole, wobei die Übertragung hybridautomatische Wiederholung und Anforderung anwendet;
Anwenden (304) eines schlitzweisen Datenverschachtelungsmusters bei Neuübertragungen, wobei das Muster die Distanz von Dateneinheiten von den Referenzsymbolen im Vergleich mit Dateneinheiten, die die gleichen oder verwandte Informationen in einer vorherigen Übertragung befördern, variiert.

9. Verfahren nach Anspruch 8, ferner umfassend:
Anwenden eines schlitzweisen Datenverschachtelungsmusters bei Neuübertragungen, wobei die Positionen von Dateneinheiten mit der größten Distanz von den Referenzsymbolen in der ersten Übertragung am nächsten zu den Referenzsymbolen verlagert werden.

10. Verfahren nach Anspruch 8 oder 9, ferner umfassend:
Übertragen von Daten unter Nutzung eines Teilrahmens, umfassend zwei Zeitschlitze, wobei die Positionen der Dateneinheiten in den zwei Zeitschlitzen schlitzweise verschachtelt sind.

11. Verfahren nach Anspruch 8, wobei die Dateneinheit eines von Folgendem ist: ein OFDM-Symbol, ein Datenbit, ein moduliertes Symbol.

12. Verfahren nach Anspruch 8, ferner umfassend: Anwenden eines im Voraus bestimmten schlitzweisen Verschachtelungsmusters bei jeder Neuübertragung.

13. Verfahren, umfassend:
Steuern der Übertragung von Daten in Schlitzen, umfassend Referenzsymbole, wobei die Übertragung hybridautomatische Wiederholung und Anforderung anwendet;
Detektieren eines schlitzweisen Datenverschachtelungsmusters bei Neuübertragungen, wobei das Muster die Distanz von Dateneinheiten von den Referenzsymbolen im Vergleich mit Dateneinheiten, die die gleichen oder verwandte Informationen in einer vorherigen Übertragung befördern, variiert;
Rückgängigmachen der Verschachtelung (412) der Daten; und
Kombinieren (414) der von der Übertragung und der vorherigen Übertragung erlangten Informationen.

14. Verfahren nach Anspruch 13, ferner umfassend: Steuern der Übertragung von Informationen hinsichtlich eines schlitzweisen Verschachtelungsmusters.

15. Computerprogrammprodukt, verkörpert in einem Verteilungsmedium, umfassend Programmanweisungen, die, wenn sie in eine Vorrichtung geladen werden, die Vorrichtung steuern, das Verfahren nach einem der Ansprüche 8 bis 14 durchzuführen.

## Revendications

1. Appareil, comprenant :
au moins un processeur ; et
au moins une mémoire comportant un code de programme informatique, l'au moins une mémoire et le code de programme informatique étant configurés pour, avec l'au moins un processeur, amener l'appareil à au moins :
commander la transmission de données dans des tranches comprenant des symboles de référence, la transmission appliquant une répétition automatique et une demande hybride ;
appliquer (304) un motif d'entrelacement de données par tranche dans des retransmissions, le motif faisant varier la distance d'unités de données par rapport aux symboles de référence en comparaison aux unités de données qui acheminent des informations identiques ou connexes dans une transmission antérieure.

2. Appareil selon la revendication 1, configuré pour appliquer un motif d'entrelacement par tranche dans des retransmissions, où les positions d'unités de données ayant la plus longue distance par rapport aux symboles de référence dans la première transmission sont rapprochées des symboles de référence.

3. Appareil selon la revendication 1, dans lequel la transmission comprend une sous-trame comprenant deux tranches de temps, dans lequel les positions des unités de données sont entrelacées par tranche dans les deux tranches de temps.

4. Appareil selon la revendication 1, dans lequel l'unité de données est l'un : d'un symbole OFDM, d'un bit, d'un symbole modulé.

5. Appareil selon la revendication 1, configuré pour appliquer un motif d'entrelacement par tranche prédéterminé dans chaque retransmission.

6. Appareil, comprenant :
au moins un processeur ; et
au moins une mémoire comportant un code de programme informatique, l'au moins une mémoire et le code de programme informatique étant configurés pour, avec l'au moins un processeur, amener l'appareil à au moins :
commander la réception de données dans des tranches comprenant des symboles de référence, la transmission appliquant une répétition automatique et une demande hybride ;
détecter un motif d'entrelacement de données par tranche dans des retransmissions, le motif faisant varier la distance d'unités de données par rapport aux symboles de référence en comparaison aux unités de données qui acheminent des informations identiques ou connexes dans une transmission antérieure ;
désentrelacer (412) les données ; et
combiner (414) les informations obtenues à partir de la transmission et de la transmission antérieure.

7. Appareil selon la revendication 6, configuré pour commander la transmission d'informations relatives au motif d'entrelacement par tranche.

8. Procédé comprenant :
la commande de la transmission de données dans des tranches comprenant des symboles de référence, la transmission appliquant une répétition automatique et une demande hybride ;
l'application (304) d'un motif d'entrelacement de données par tranche dans des retransmissions, le motif faisant varier la distance d'unités de données par rapport aux symboles de référence en comparaison aux unités de données qui acheminent des informations identiques ou connexes dans une transmission antérieure.

9. Procédé selon la revendication 8, comprenant en outre :
l'application d'un motif d'entrelacement par tranche dans des retransmissions, où les positions d'unités de données ayant la plus longue distance par rapport aux symboles de référence dans la première transmission sont rapprochées des symboles de référence.

10. Procédé selon la revendication 8 or 9, comprenant en outre :
la transmission de données en utilisant une sous-trame comprenant deux tranches de temps, dans lequel les positions des unités de données sont entrelacées par tranche dans les deux tranches de temps.

11. Procédé selon la revendication 8 dans lequel l'unité de données est l'un : d'un symbole OFDM, d'un bit, d'un symbole modulé.

12. Procédé selon la revendication 8, comprenant en outre: l'application d'un motif d'entrelacement par tranche prédéterminé dans chaque retransmission.

13. Procédé comprenant
la commande de la réception de données dans des tranches comprenant des symboles de référence, la transmission appliquant une répétition automatique et une demande hybride ;
la détection d'un motif d'entrelacement de données par tranche dans des retransmissions, le motif faisant varier la distance d'unités de données par rapport aux symboles de référence en comparaison aux unités de données qui acheminent des informations identiques ou connexes dans une transmission antérieure ;
le désentrelacement (412) des données ; et
la combinaison (414) des informations obtenues à partir de la transmission et de la transmission antérieure.

14. Procédé selon la revendication 13, comprenant en outre :
la commande de la transmission d'informations relatives à un motif d'entrelacement par tranche.

15. Produit de programme informatique mis en oeuvre sur un support de distribution comprenant des instructions de programme qui, à leur chargement dans un appareil, commandent l'appareil pour exécuter le procédé selon l'une quelconque des revendications 8 à 14.
